# EUROPEAN PATENT SPECIFICATION

(11) **EP 3 326 024 B1**
(45) Date of publication and mention of the grant of the patent: **03.01.2024**
(21) Application number: 16745175.6
(22) Date of filing: 07.07.2016
(51) Int. Cl.: G02C 11/02, G02C 5/22

(54) **MAGNETIC ATTACHMENT SYSTEM FOR REMOVABLE ELEMENTS IN SPECTACLE FRAMES**
MAGNETISCHES BEFESTIGUNGSSYSTEM FÜR LÖSBARE ELEMENTE BEI BRILLENFASSUNGEN
SYSTÈME DE FIXATION MAGNÉTIQUE POUR ÉLÉMENTS AMOVIBLES DANS DES MONTURES DE LUNETTES

(30) Priority: 22.07.2015 IT UB20152401
(43) Date of publication of application: 30.05.2018
(73) Proprietor: Giuliani, Dea, 00068 Rignano Flaminio (RM) (IT)
(72) Inventor: GIULIANI, Dea, 00068 Rignano Flaminio (RM) (IT); STRIULI, Alessandro, 30173 Venezia Mestre (VE) (IT)
(74) Representative: Bruni, Giovanni
(86) International application number: PCT/IB2016/054093
(87) International publication number: WO 2017/013522

(56) References cited:
- EP-A1- 1 860 484
- WO-A1-03/036365
- CA-A1- 2 321 318
- US-A1- 2009 195 747
- US-A1- 2013 235 332
- US-B1- 6 217 170

## Description

The field of application of this invention concerns the construction of spectacles frames.

The scope of protection of the present invention is limited by the appended claims.

US2013/235332A1 discloses a spectacle frame comprising a connection between the spectacle frame front and a temple which connection comprises at least one permanent magnet. The magnet has a hollow cylinder shape, the cylinder having an opening.

CA2321318A1 and US6217170B1 disclose a spectacle frame with magnetic hinges. US2009/195747A1 discloses a spectacle frame comprising a magnetic coupling that enables eyeglass temples to be swiftly and easily changed.

WO03/036365A1 discloses a spectacle frame comprising a frame support, also realized with a ferromagnetic material, and at least one removable element, said at least one removable element comprises at least one permanent magnet, and the permanent magnet is coupled to the articulation and join element of a temple piece of said frame support.

EP1860484A1 discloses a spectacle frame comprising a connection between the spectacle frame front and a temple which connection comprises at least one permanent magnet. The magnet is vertically inserted into a hole defined in the connection.

The commercial offer of spectacle frames is targeted to very diverse market segments, and therefore proposes a wide variety of models in continuous renewal. It is understandable as the eyewear is an object of strong visual impact, so that sometimes it affects even the expressivity of a person.

At the same time, the eyewear holds other important, but not strictly aesthetic, constraints, which must be considered a great extent as custom constraints. The eyewear must fit well, it must be of a size and shape consistent with the size of the face, and it must be comfortable for the wearer, etc ....

The consequence of such, personal type, constraints is that, in many cases, people get used to a particular pair of glasses to the point that they not even realize to wear that object on their face. However, to get used to a pair of glasses to such a point, it is obviously necessary to wear it with continuity.

So happens that many people, even the most conscious to the care of their image, put a lot of attention in the selection of what they wear (various kinds of accessories, jewelry, clothes etc ...), but they often wear the glasses that they are used to wear without being able to take care of ensuring if they match with the rest of their apparel.

The reason for such behavior lies in various arguments, including the fact that, generally, there are few pairs of glasses that people wear with comfort (often, only one pair glasses is really comfortable). Obviously, there are also reasons of cost that limit the number of glasses possessed by a person. In fact, the costs would become significant for those people wishing to equip themselves with many pairs of glasses.

Often, the aesthetic choice of eyewear is based on the criterion of the general adaptability, especially those people who have to wear prescription eyeglasses don't "dare" in the purchase of a spectacle frame.

Given the great aesthetic value of the eyewear worn, the market continuously offers updated spectacle frames with the rhythms of change typical of fashion's world, which are seasonal rhythms.

Moreover, according to the future trends, it is expected that it will be insufficient to follow merely the fashion's styles. The glasses will then be chosen to follow the combinations with clothing or other accessories carried by the person wearing the glasses, until you get to the point of wearing different glasses according to the occasion, just as in choosing a dress.

This evolutionary trend, which concerns the use of glasses driven by an aesthetic perspective, may requires that people have a large number of pairs of glasses. However, this solution, not only is too expensive, it is also impractical, especially for those who need prescription eyeglasses, since when you need to update the graduation of the lens, you always have to replace the lenses in a large number of eyeglasses.

In synthesis, there are evident aesthetic and stylistic tendencies toward a more varied use of glasses: the eyewear is more and more an accessory that the person should change frequently. On the other hand, there are reasons of cost, convenience and ease of use, which slow such trend, set out above.

One solution involves the construction of frames for glasses in some editable manner. Thus, changing some removable aesthetic details, it is possible to change aesthetically the eyewear without the person has to possess so many glasses.

The prior art proposes various solutions in this regard. In some cases, the frames can be disassembled and reassembled with different pieces: this requires some maneuvers and operations of varying difficulty; and the coupling between the various parts may requires screws, snap joints, and other various types of hooks.

One solution, among the most practical ones, to achieve spectacle frames with removable and interchangeable parts consists in realizing frames for glasses made of an essential metal structure that can be completed with the application of magnetic removable elements, made of various materials, in which a magnet is inserted. All this in order to aesthetically characterize the glasses with a sufficient flexibility.

The patent applications ITPD2014A000140, as well as US4070103A and other, show frames of this type in which the removable parts are applied to the metallic structure of the frame by means of magnets (generally fixed on the removable parts) which have the function of keeping said removable parts attached to said metallic structure. However, the various solutions presented do not enter into constructive detail of the magnetic coupling (or enter it in part, without addressing basic details of a physical nature).

The fact that the problem of the magnetic coupling is not adequately solved by a satisfactory proposal about the magnets able to guarantee adequate performances, is a fact reflected in the commercial offer, which does not propose yet metallic glasses with decorative removable parts applied magnetically.

The use of magnets in the spectacle frames is still very limited, just in sportswear eyeglasses (generally of significant size) and often not for purely aesthetic purposes: for example, to apply a "mask" with a solar filter to be superimposed to the prescription lenses.

In particular, in order to fully satisfy the aesthetic function for which frames of this type are designed, it is of particular importance that the magnetic couplings do not impose excessive constraints on the thickness of the removable parts. Moreover, the main scope of this interchangeability of removable components is essentially that of offering the user of eyeglasses a possibility: changing the characteristic look of their glasses with simplicity, giving him a "solid solution" and, at the same time, "easy to handle".

Solidity implies that there must not be any risk that the removable parts detach (or move); while the "ease to handle" translates into the fact that there must not be the need to use tools to modify the frame (screwdrivers, pliers, wrenches etc....), and neither the replacement operations (eg. "interlocking" or "snap") should contemplate risks of breakage or wear.

The solution based on the magnetic coupling, making use of permanent magnet (or magnets), is certainly interesting for the stated purposes, but should be defined and carefully applied, since the force that a permanent magnet can exert on a ferromagnetic material is closely linked to the shape and to the volume of the magnet itself.

In particular, magnets too small or thin exert weak forces, and therefore the solidity would be compromised, while the use of more "strong" magnets implies constraints on the thickness and the form of removable parts; This is because the "stronger" magnets are also necessarily more voluminous.

Also the problem of demagnetization must be taken into account, finding solutions which provide that the permanent magnet is almost always in the rest position, and that, in this position, it can preserve for a long time its condition of permanent magnetization.

The fundamental problem of the application of the idea to build spectacles frames in which removable parts apply magnetically to a metallic structure of the frame is therefore to define a shape (or the generic characteristics of said shape) to be attributed to the magnets, and a mode of installation which does not impose aesthetically unacceptable constraints (e.g. excessive thickness of the removable parts) ensuring, at the same time, an adequate mounting strength.

Finally, not only the coupling must be firm and easy to handle, but also the aesthetic should result to be satisfactory, so as not to communicate the aesthetic impression of "precariousness".

Therefore, first objective of the present invention is that of indicating a magnetic coupling system for removable elements on spectacle frames, in order to modify aesthetically the eyeglasses; and said magnetic coupling system should ensure that each party is securely coupled, in order to prevent accidental detachment even when the glasses is handled carelessly and without paying particular attention.

Another object of the present invention is that of indicating a magnetic coupling system for removable elements in frames for glasses in which the shape and the size of the magnets does not impose constraints on the shape of the frame, constraints such as to make the hooking system applicable only in thick or at least cumbersome frames. Another object of the present invention is that of indicating a magnetic coupling system for removable elements in frames for glasses in which said removable parts may be made of various materials, without imposing constraints on their properties of flexibility. In fact, the aesthetic reasons for which those removable parts will be realized may require the use of rigid or brittle materials, for which it would be appropriate not to provide for interlocking fittings which require to force their flexibility.

Again, another object of the present invention is that of indicating a magnetic coupling system for removable elements in frames for glasses in which the coupling can be obtained in such a way as not to be noticed, and the final aesthetic result can appear like that of " ordinary" eyeglasses, not constituted by removable elements.

Moreover, another object of the present invention is that of indicating a magnetic coupling system for removable elements in frames for glasses in which the magnetic fields, which are necessarily present, do not affect parts of the head of the person wearing such glasses. The latter objective is absolutely not taken into account in the few prior art cases, in which glasses present magnetically coupled elements. This is probably due to the fact that the cases in question are very limited, but the question is certainly of significant importance, as it is highly preferable that parts of the head of a person do not remain for a long time immersed in a magnetic field.

Finally, another object of the present invention is that of indicating a magnetic coupling system for removable elements in frames for glasses in which are used permanent magnets in which the shape allows, in the rest position (i.e., when the removable part is applied to, or when it is stowed away), to preserve their state of magnetization. These permanent magnets, for avoiding demagnetization, must be coupled to ferromagnetic elements (in the so-called air-gap zone) in such a way that the lines of the magnetic field are all substantially confined within a magnetic circuit made of ferromagnetic material.

All these objects, and other ones, can be achieved by means of a spectacle frame with detachable elements coupled to a frame support also made of a ferromagnetic material, and characterized in that the removable parts include a permanent magnet whose shape is substantially similar to an open loop in which the two magnetic pole surfaces are located on the two ends of said open loop, and they also constitute the two faces of the opening of such open loop; and the coupling of said permanent magnet with said frame support also made of a ferromagnetic material is done through the insertion of a part, made of ferromagnetic material, of said structure between the two pole surfaces of said permanent magnet.

It is important to note that, despite being available on the market products that partially meet some of the mentioned objects, the present invention can satisfy them simultaneously and to a greater extent; in addition, it also presents other advantages that will be better and further described in the following description, in the appended claims which make up an integral part of the same description and by the illustration of some practical embodiments described as a way of non-limiting examples in the following and in the accompanying drawings on which:
Figure 1 shows a magnetic bar and its associated lines of field;
Figure 2 shows a magnet in the shape of a "horseshoe" or "U";
Figure 3 shows a magnet in the shape of a "disk" or "cylinder" and its associated lines of field;
Figure 4 shows some schematic decompositions of a permanent magnet;
Figure 5 shows an essential metallic support for a spectacle frame;
Figure 6 shows a magnet in the shape of an "open loop"
Figure 7 shows a detail in which it is highlighted the coupling between a magnet in the shape of an "open loop" and the metallic support for a spectacle frame;
Figure 8 shows a detail in which it is highlighted the coupling between a magnet in the shape of a "horseshoe" and the metallic support for a spectacle frame;
Figure 9 shows an example of hybrid coupling of a removable decorative element to a frame.

To illustrate properly the operation and advantages of the present invention it is useful to recall that a permanent magnet is a block made of a material (ferromagnetic) suitably treated in order to generate a magnetic field.

Any magnet is characterized by having a "north pole" and a "south pole". The name derives from the fact that a magnetic bar polarized longitudinally, and left free to rotate, is oriented so that one end tends towards the terrestrial north geographic pole (with an approximation, here acceptable, due to the fact that the terrestrial magnetic field is not perfectly aligned with the axis of rotation of the earth), while the opposite end tends towards the south geographic pole. Conventionally the "north pole" of a magnet corresponds to the extremity that tends to the geographic north pole; correspondingly, the "south pole" of a magnet will be the one corresponding the end which tends to move towards the south geographic pole.

In a magnetic field generated by a magnet, the field lines are closed lines that pass through the body of the magnet. These lines "come out" from the magnetic body of the magnet from surfaces corresponding to the magnetic "north pole", they run through the outer space to the magnet and fall within the magnet itself through a surfaces corresponding to the magnetic "south pole".

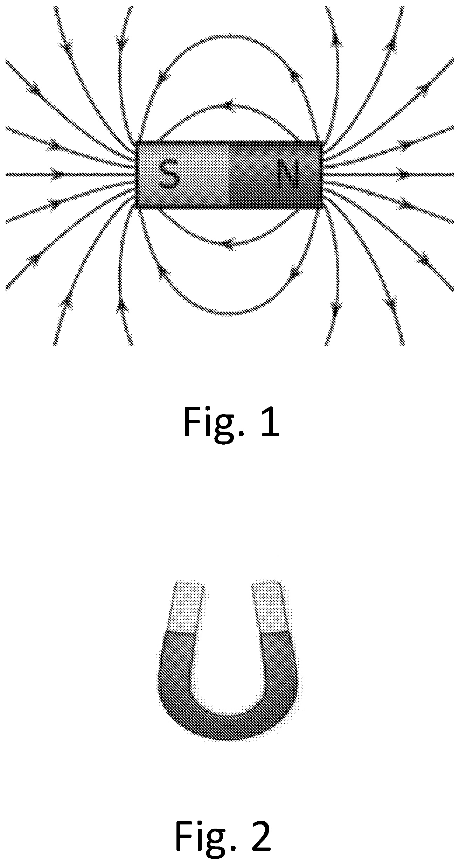

One of the simplest shape of a magnet is the shape of a longitudinally magnetized bar, such as that shown in Figure. 1 in which the field lines exit from the "north pole" of the bar to get back into the bar through the "south pole".

The magnetic field is more intense the more dense are the field lines, and therefore, in the case of Figure 1 the field is greater at the ends of the bar where the lines are all closely in a beam and weakens as soon the lines pull away in free space to walk the closed route. Without now entering in the analysis of the interaction forces between magnets (among which arise both attractive and repulsive forces) we can state that a permanent magnet exerts a force of attraction on the ferromagnetic material (not previously magnetized permanently); and the attraction is stronger the more such ferromagnetic materials are approached to such a magnet in the correspondence of the surfaces at which the magnetic field is more intense, i.e. in correspondence of its polarity. In practice, a magnetic bar (magnetized longitudinally) attracts ferromagnetic materials with greater strength at its ends.

They exist permanent magnets of various shapes: they can have various sections or may also be bent in different ways, so that the two polarities of the magnet can be placed side by side as in the case of the magnet in the shape of "U" (also called "horseshoe") represented in Figure 2. It has to be noted that, in the latter case, since the two polarities are placed side by side, a solid body made of ferromagnetic material which has a roughly flat face, oriented toward the ends of that "horseshoe magnet ", can be attracted simultaneously by both polarities (both ends) of the magnet, which can therefore exert a greater force of attraction compared to the case in which the same magnetic material was shaped so as to have the two polarities facing in opposite directions (as in a bar).

In fact, the "horseshoe magnets " are especially used for lifting applications as they allow to exploit, at the same time and in the same direction, the attraction of both the poles of the magnet. Note how in these magnets, easily available commercially, both polarities (marked with "S" and "N" letters) are arranged in a suitable way so that they can both adhere to the same surface and, in such a way, exert a force sufficient to raise a body. Moreover, as better explained in the following, the "horseshoe" shape also allows to realize other geometric characteristics which favor the development of particularly powerful magnets.

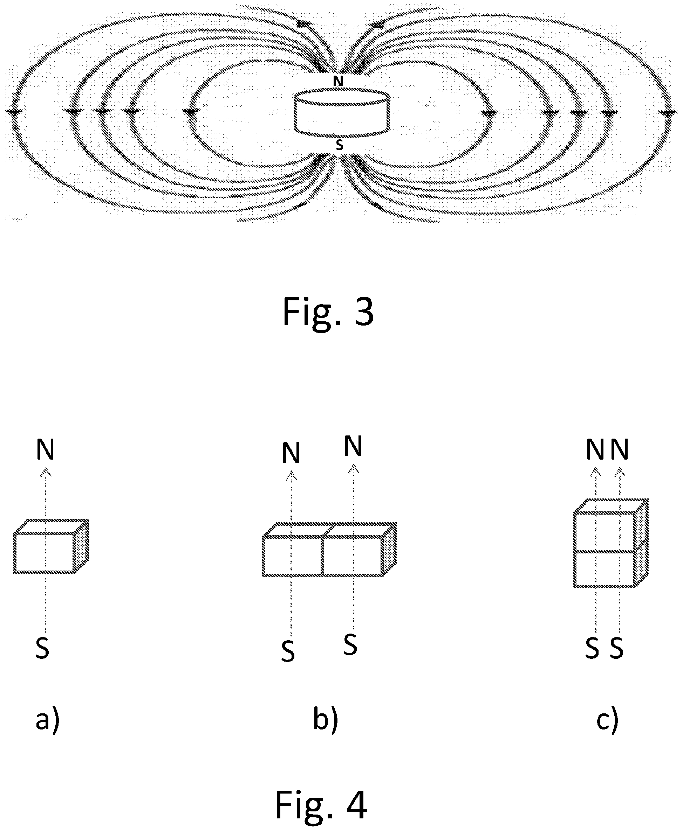

Among the most commonly used magnets, and therefore easily available on the market, there are those disk-shaped (or cylinder), as the one represented in Figure 3. These magnets are cited here as they are the ones typically used for applications similar to that which is the object of the present invention. Their use is quite frequent since it can be realized in quite thin dimensions (in the order of a few millimeters) and can therefore be easily inserted into a movable part and make it to adhere to a corresponding metal part, in the points where an area of sufficient adhesion is provided.

These magnets, as it can be seen from Figure 3, present their polarities on the opposite faces and they are associated with a magnetic field which extends into the whole surrounding space, making it particularly difficult to be confined in predetermined areas. Although they are sometimes used, these magnets are therefore not suitable for the case in question. The reason for this will be further explained hereinafter and will be treated without the use of mathematical formalisms, which, however, are not strictly necessary in this case.

In Figure 4a) a small cube made of a magnetized material is depicted: it will generate a certain magnetic field. To increase this magnetic field (assuming that the material is magnetized up to its physical limit), it will be necessary to add another magnetic field generated, for example, by another cube, the same as above, and which is also made with the same magnetized material. Of course, since the fields of the two magnets will not elide each other, you will need to take care that the fields are oriented in the same direction. In this case the magnetic fields will be summed and you will obtain the cases represented in Figure 4b) or 4c).

In Figure 4b) the two cubes are placed side by side. They generate a total magnetic field flux, on a closed surface that contains both cubes, double compared to the flow generated by a single cube. The resulting magnet will be, however, double in volume: in this case wider.

In Figure 4c), instead, the two cubes are placed one above the other. As in the previous case, they will generate a total magnetic field flux, on a closed surface that contains both cubes, double compared to the flow generated by a single cube. Even in this case, however, the resultant magnet will be double in volume: in this case higher.

The graphic exemplification clearly shows (and in absolutely intuitive way) as the magnetic attraction (which is linked to the magnetic field flux) that can be exerted by a permanent magnet, of course if the used material is the same, is approximatively proportional to the volume of the magnet itself.

In reality, when the opposing pole faces are very close (in the case of very thin disks) such proportionality is not maintained and the magnetic fields are weaker. In any case, this approximation does not affect the substantial conclusions, which, in fact, result even strengthened, and true even more so, if taking into account of such approximation.

In geometric perspective, it can therefore be concluded that, a given force of attraction can be achieved with a "flat" magnet but having a wide polar surfaces (adhesion surface), or by a magnet with a smaller area of adhesion, but of course, equal in volume, and therefore the magnet will be more "thick."

Returning now to the considerations about the choice of the magnets to be used in the application in question, it is evident that the magnets in the shape of a disc present significant contraindications. Or they are thin, but then they must be broad, or they are focused on a small area of adherence, and then they must present a certain thickness.

So far we have always used qualitatively expressed terms in indicating the strength and size: we have said of more or less large areas, magnets more or less subtle and couplings more or less solid. This is due to the fact that the forces depend on the materials used, the strength of a coupling depends largely on the maximum weight of the removable parts and the points where the adherence is planned.

In order to give a reference, here it follows a realistic value related to a neodymium magnet (a rare earth generally used in combination with iron and boron to make magnets of excellent quality): a disk 1.5 mm thick and having a diameter of 3 mm can exert a force of the order of 100 grams-force. In other words, this magnet can certainly exert a force sufficient to support a removable ornamental part of a frame, but it is not a force sufficient to state that a coupling is "solid", taking into account that a pair of glasses can be taken off, recovered and handled provoking stresses of a certain intensity.

Moreover, the size of a disk as the one considered is not negligible, in fact it imposes constraints on the minimum thickness of the removable elements and on the surface to be reserved to the magnetic coupling.

The search for the most suitable shape that a magnet has to assume to perform the essential function of the application in question, i.e. the firm fixing of a removable element on a metal frame structure, obviously depends also on the shape of the considered metal structure.

Being then the purpose of the application of a purely aesthetic nature, and wanting to maintain minimum dimensional constraints and of the form, it would seem reasonable to consider a frame for eyeglasses the most essential possible. In fact, the thinner the structure (basically threadlike) and the more it will be possible to conceive of a complete frame (i.e. including the removable aesthetic parts applied), which is also aesthetically "slim" and "light".

As a result of the above considerations, it would seem possible to conclude that the magnets in the shape of a disk (the most common type) appear unfit for the application in question, since they require a too large grip surface and a thickness of the removable parts which is sufficient to accommodate these magnets.

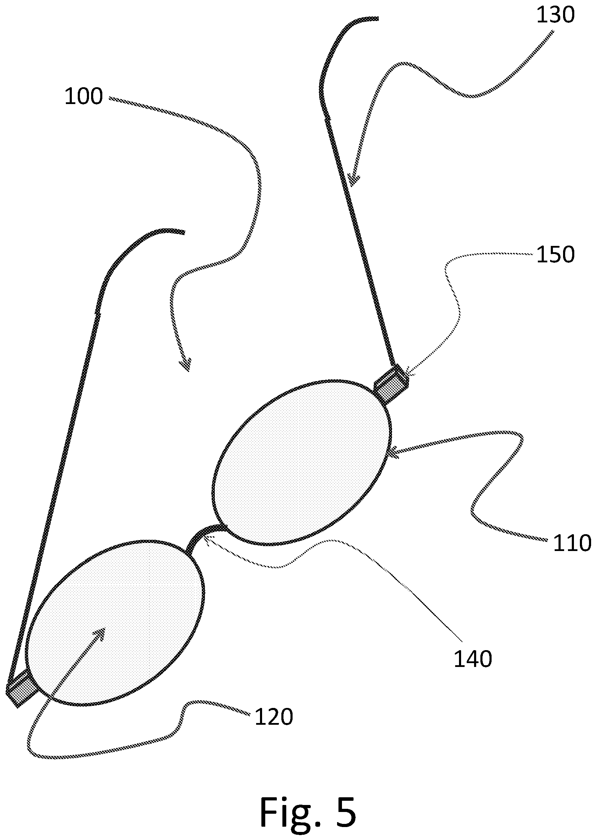

Looking for other solutions, we then consider a very essential frame structure, such as that depicted in Figure 5 and indicated, as a whole, with the number 100.

The frame structure 100, due to its extreme simplicity, is suitable to be enriched with covers of various shapes and colors: from the most slender to the most redundant, and therefore it represents a frame structure suitable for the implementation of the present invention.

With the number 110 is indicated the rim of the lenses, said rims of the lenses shown in Figure 5 are very thin and have only their essential function which is that of supporting the lenses, which are indicated in Figure 5 by the reference numeral 120. Therefore, the lens rims 110, in general, do not have sufficiently large surfaces to adhere firmly a magnet.

The only points that, as will be clarified hereinafter, are potentially usable to mate to a magnet are represented by the parts indicated with numbers 140 and 150.

The number 140 indicates the so-called "nose bridge" of the frame 100, i.e. the element that connects the two lens rims, while the number 150 indicates the joint that connects to the frame the two bar lines, or "temple pieces", indicated with the number 130.

The joint 150 is an element naturally present in all the frames of glasses and is typically positioned alongside to the rims 110 (because it makes little sense that it is placed behind the lens). Said joint 150 is potentially feasible in many ways, and in some cases it can have an extremely small volume, the most typical case provides that it has a volume sufficient to contain a hinge and, almost always, even a screw.

This joint element 150 is a very interesting point for a magnetic coupling, not just for the size, but also because it is in a position where there is some space along various directions: towards the front of the eyeglasses, towards the rear along the bar line, upwards and downwards and, if appropriate, also towards the side of the glasses.

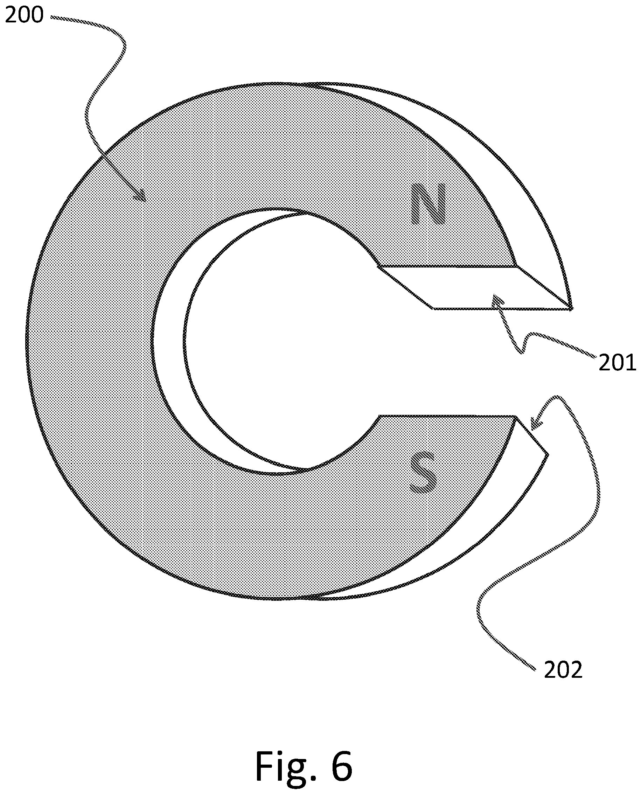

Paying more attention to these joints 150, it seems clear that they represent an ideal point of adhesion for a particular form of magnet: in the shape of a "open loop", like that of the magnet depicted in Figure 6 and indicated with the number 200.

In Figure 6 is then indicated with the number 201 the surface corresponding to the "north" polarity of the magnet 200, while with the number 202 is shown the surface corresponding to the "south" Polarity.

The first prerogative that can be inferred from the shape of the magnet 200, is that the surfaces 201 and 202 corresponding to the polarities "north" and "south" are facing one another. Obviously their mutual distance and the angle of said two surfaces 201 and 202 depend on how is realized the opening of the loop.

A magnet 200, as that shown in Figure 6, is a variant of the so called "horseshoe" or" U" magnets, with the difference that the surfaces corresponding to the polarities are not coplanar (as in magnets "U "), but they rather tend to face each other.

An "open loop" magnet as the magnet 200 can adhere as a kind of clamp, above and below, at the mechanism of joint 150 in which the two temple pieces 130 are attached to the frame 100.

It is also useful to note that in an "open loop" magnet 200, like that in Figure 6, the field lines, outgoing from the polarities "north" 201 and incoming to the "south" polarity 202, may follow a short path without dispersing in the surrounding space.

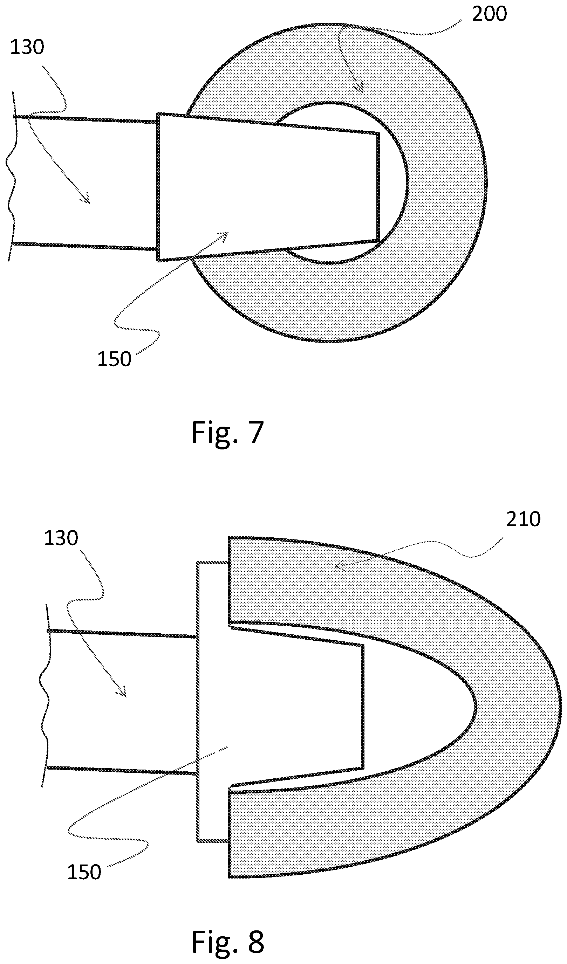

In Figure 7 it is shown a detail of the frame 100 with a side view. Figure 7 is focused on the particular corresponding to the joint 150 and it shows the extremity of the temple 130 on the side that is attached to the frame 100.

Figure 7 is quite eloquent, and highlights especially the magnet 200 coupled to the joint 150.

The coupling shown in Figure 7 provides that the articulation element 150 may fit into the opening of the "open loop" magnet 200. Moreover, by providing a slightly trapezoidal shape for the mechanism of joint 150, with the narrower part which allows the element 150 to wedge into the opening of the magnet 200, it is possible to ensure a perfect adhesion of the polar surfaces of the magnet 200 with the upper and bottom faces of the mechanism of joint 150.

With the number 130 it is then also represented a part of the temple piece; this allows to explain (even visually) as said magnet 200 can be applied from the front of the frame 100, with the opening facing the temple piece 130. A magnet 200 of this shape may therefore ensure a substantial seal, and the articulation element 150 is one of the most favorable hooking points for the coupling of an "open loop" magnet.

Figure 8 is similar to the previous Figure 7, with the variant that the magnet 200 of Figure 7 is replaced by a classical "horseshoe" magnet, indicated with the number 210, in which the polar surfaces are coplanar; accordingly, the element of joint 150 must assume a suitably modified form to adapt itself to this form of magnet that, for this specific application, is certainly less convenient than it is the "open loop" magnet 200 presented in Figure 6 in which the two polarities are facing each other.

However, the variant presented in Figure 8 shows how they are possible magnetic coupling variants, and they are all characterized by the fact that the magnet body can achieve significant volumes by "wrapping" the ferromagnetic element to which it adheres, and therefore it is possible, with the same volume of magnet, to create couplings that are slightly protruding.

In addition, these "wraparound" magnets allows you to exploit the power of attraction of both polarities and, most importantly, they allow, when the magnet is applied, to create a magnetic circuit which substantially adjoins the magnetic field generated by the magnet within the magnet itself and the ferromagnetic material to which it is coupled: this result has the double benefit of preserving the fast magnet demagnetization and does not involve the presence of appreciable magnetic fields at the head of the person wearing the glasses.

Such considerations are exposed to illustrate the generality of the inventive concept taught in the present invention. In the following description of the present invention we will ideally refer to the solution based on an "open loop magnet", like that represented by the number 200 in Figures 6 and 7, which appears as the preferred shape for the present application: however, with the expression - "open loop magnet" 200 - we will intend from now on, and in the claims too, a magnet in a shape of a generic curve able to wrap an external element, which can be inserted between the two poles of the magnet, touching both polar surfaces.

The previously described magnetic coupling, and represented in Figure 7, requires a point of application like the articulation mechanism 150: which has a certain thickness and, above all, has a bit of space around it to be "wrapped" (for use an evocative term previously used) by a magnet 200.

But, to adequately meet the solidity requirement of the attachment of the removable parts, it is appropriate to provide more than one coupling point.

However, given the effectiveness of the magnetic engagement realized in correspondence of the articulation mechanism 150, the additional attachment points may therefore be designed with smaller requirements of magnetic holding or, even, they may provide nonmagnetic coupling, being the magnetic coupling, placed on the joint 150, the main one, i.e. the engagement to which entrust the fulfillment of that prerogative of ease of assembly / disassembly.

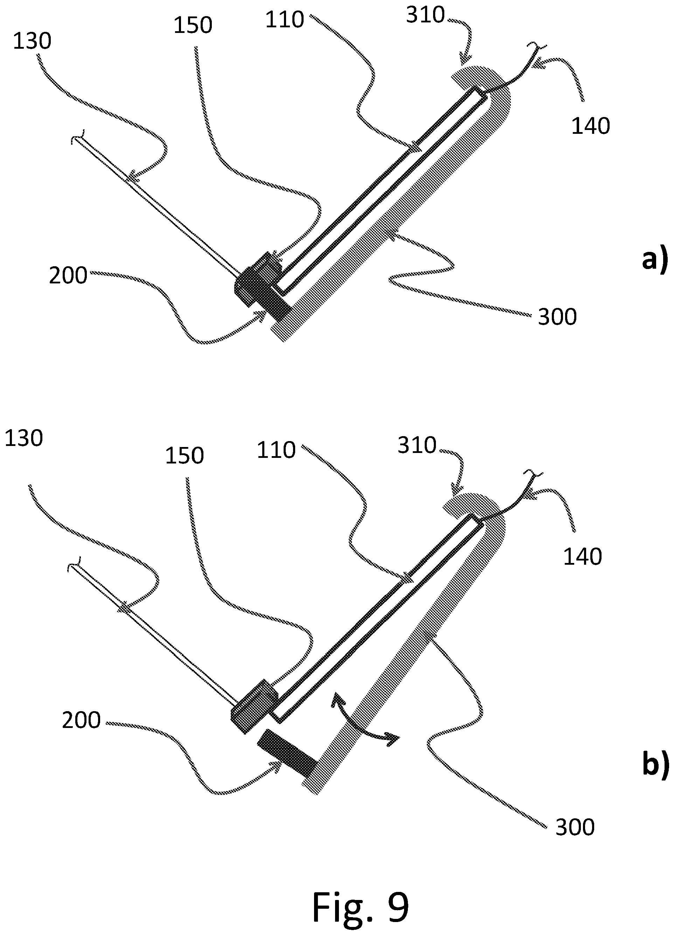

Figure 9 shows a hybrid magnetic and mechanical coupling between a removable part and a frame 100.

The number 300 indicates said removable part. Figure 9 is divided into a Figure 9a) which shows said removable part 300 applied to the frame, while Figure 9b) shows said removable part 300 in a partially engaged position, so as to illustrate a possible maneuver of engagement or release of the same.

Figure 9 also shows the different elements of the frame 100 that are relevant to describe the positioning of said removable part 300 on the frame 100. These elements are indicated with the same numbering used in the preceding figures, so that the number 130 shows a bar line, the number 150 indicates the articulation element (or joint), the number 110 the circle of the lens (or rim), the number 140 indicates the connecting bridge between the two rims of the lenses, finally the number 200 shows the magnet which is supposed to be integrated in the removable element 300, and from the top view it looks like a rectangle so that you cannot appreciate the typical shape for "open loop", appreciable instead from a side view.

Finally, with the number 310 it is shown the opposite extremity of removable element 300, which is in a "on hook" form.

In Figure 9a), as said, the removable element 300 is applied to the frame 100. In the example in the figure it is hooked in two points corresponding to the ends of said removable element 300. From the end side 310 the removable element 300 is mechanically hooked to the rim of the lens 110, thanks to the particular form assumed by that end which allows, in fact, a mechanical coupling. From the opposite side, instead, it is present the magnetic coupling described earlier, and in fact the articulation element 150 is penetrated in the magnet 200 which, as described in detail above, has an opening facing towards the temple 130.

A coupling as the one shown in Figure 9a) is actually very firm as it is based on two hooking points both very solid. In fact, the mechanical coupling can be implemented with a rigid and sufficiently resistant material, while the magnetic coupling is sufficiently firm for the reasons explained above.

Once ascertained the strength of the coupling, it is also important to analyze the ease of assembly and disassembly of the removable part 300
Figure 9b) shows said removable part 300 in a position partially detached from the frame 100. In particular, the magnetic coupling is represented detached.

The maneuver of detachment of the removable part 300 is analyzed first, it is just pulling the magnetic fastening: in fact, although strong enough it can be detached by exerting a force exceeding the force of magnetic attraction; as soon as the magnetic coupling is detached, the mechanical coupling, being the only engagement remained, can rotate, and the removable part 300 can be pulled out without any resistance force.

The maneuver of application of the removable part 300 to the frame 100 will require the same simple operations executed in reverse order. You first need to mechanically engage the hooking end 310; this last, as long as it is the only coupling point, allows a non-contrasted rotation of the removable element 300, up to couple the magnet 200, which is located at the opposite end of the removable element 300, to the articulation element 150. As the magnet 200 approaches the articulation element 150, a more intense magnetic force of attraction will guide the movement of the removable part 300 towards its final position.

The example of Figure 9 shows as a removable element 300 can be applied to modify or enrich aesthetically a circle of the lens 110, and how it can be applied to the frame by means of two attachment points: one, magnetic, in correspondence with the articulation element 150 and another, mechanical, achieved by obtaining a form of "hook" on said removable element 300, so that this one can hook to the circle of the lens 110 in the vicinity of the point in which the frame, when worn, leans on the nose.

This point for the mechanical coupling is particularly favorable because the frames, in general, are wider right at that point of support on the nose (in order to make more comfortable the frame), and therefore it can be very convenient to obtain, precisely in this position, a hook particularly strong, fit for this purpose.

Obviously, the proportions and shapes of the elements depicted in Figure 9 are not aesthetically significant, and the purpose of the representation is not that to exemplify the aesthetic potential of the hybrid coupling system according to the invention. However, the example proposed through the description of Figure 9 shows how the presence of just one magnetic coupling is sufficient to make more effective and safe the mechanical couplings too, thereby making the coupling system proposed convenient and appropriate to meet the objectives for which the present invention has been conceived.

In fact, eventual systems based solely on mechanical hooks, necessarily work by means of "interlocking" or "snap" mechanisms that require continuous stresses of the flexibility of the materials, and then, for the effect of time and usury, these systems become loose or, in the worst case, they break.

Moreover, these mechanical hooks cannot be very localized in points of hook small and strong (for not requiring excessive deformations in the mounting and dismantling), therefore it is necessary to have recourse to extended hooking lines, thereby imposing constraints on both the removable element 300 shape and the shape of the frame structure 100.

The coupling system taught in the present invention also does not impose any requirement of flexibility to the material with which the removable part is realized, then each designer can devise his own creations, ranging among the various materials: from the bone to the wood, even considering brittle materials such as porcelain (if these bizarre solutions were marked with the aesthetic meaning sought by the designer). In particular, it is very interesting that not flexible or rigid materials can be used. It 'is clear that this option in the choice of materials cannot be so wide in the case one opts for purely mechanical coupling systems, "interlocking" or "snap", in which the flexibility of the material is recommended to ensure the grip of docking and, at the same time, the "removability" of the element.

Moreover, a clever development of the structure of frames 100 (it is a creative activity which, however, goes beyond by the content of the present invention) may foresee a coupling system that can be designed to support the application of relatively small removable elements, and using different attachment points for hybrid coupling solutions.

Despite the great variety of solutions that the illustrated magnetic coupling system enables, however, it is possible to synthesize an essential distinguishing characteristic. It is the identification of a particularly suitable point, to make a "magnetic coupling" between a metallic glasses' frame 100 and a removable part 300 of said mount, in correspondence of the joint of the temples. That position takes particular advantage from the use of a magnet a form of "open loop" such as that depicted in Figures 6 and 7.

With respect to the requirement of robustness, the use of such a magnet in the shape of "open loop" therefore represents an extremely satisfactory solution since either the area of adhesion and the overall volume of the magnet can be sized according to the magnetic needs without excessively compromising the aesthetic constraints.

This solution has numerous advantages:
1. it guarantees a "magnetic coupling" particularly robust;
2. it does not imply any constraint on the size of the removable elements in the portion covering the rims of the lenses;
3. it does not imply any constraint on the deformability features of the removable elements;
4. the volume of the magnet (necessary to make it sufficiently "strong") is developed in a space which is aesthetically little relevant, as it protrudes a little (or nothing) towards the front and side of the eyeglasses, it spreads towards the rear (i.e. towards the temple), and covers the upper and lower part of the articulation mechanism (and in this way also serves as protection for the mechanism itself);
5. the magnetic field lines (and hence the magnetic field itself) are confined in a very limited space: the lines come out from the surface in polarity "N" and enter again the near surface in polarity to the "S", passing through the ferromagnetic material of which the articulation mechanism must be done; in this way the magnetic fields in the free space (close to the user's eyes) is substantially null.

This description has been focused on the identification of a main point of magnetic coupling, and it also indicates the best shape for the magnet to meet the goals of the application. This coupling point will then be integrated with other attachment points to completely fix the ornamental removable components to the frame. Such other additional latches may, however, be designed in various ways, and with less demanding requirements, since they can rely on a coupling which is able, alone, to confer solidity and ease of use to the entire system.

## Claims

1. A spectacle frame comprising a frame support (100), also realized with a ferromagnetic material, and at least one removable element (300); and said spectacle frame is **characterized in that**:
a. said at least one removable element (300) comprises at least one permanent magnet (200) whose shape is similar to an open ring in which the two magnetic polar surfaces (201 and 202) are located at the two ends of a said open ring, and also constitute the two faces of the opening of said open ring; and
b. the coupling of said permanent magnet (200) with said frame support (100), also realized with a ferromagnetic material, is obtained through the coupling of a part of said frame support (100), in such a way that said part, realized with ferromagnetic material, of said frame support (100) touches both said two magnetic polar surfaces (201 and 202) of said permanent magnet (200); and
c. said part, realized with ferromagnetic material, of said frame support (100), which is coupled to said permanent magnet (200) includes the articulation and joint element (150) of a temple piece (130) of said frame support (100); and
d. said removable element (300), at the opposite end where to find said permanent magnet (200), forms a "hook" (310) adapted to attach to a lens rim (110) in the vicinity of the point where said spectacle frame, once worn, leans on the nose.

2. A spectacle frame with at least one removable element according to any one of the preceding claims, wherein said removable element is made of a rigid material.

## Patentansprüche

1. Brillengestell mit einem Gestell-Träger (100), der außerdem mit einem ferromagnetischen Material versehen ist, und mindestens einem abnehmbaren Element (300); wobei das Brillengestell **dadurch gekennzeichnet ist, dass**:
a. Zumindest ein abnehmbares Element (300) umfasst einen Permanentmagneten (200), dessen Form einem offenen Ring ähnelt, wobei die beiden polaren Magnetflächen (201 und 202) an den beiden Enden des offenen Rings angeordnet sind und auch die beiden Flächen der offenen Ringöffnung bilden; und
b. Die Kopplung zwischen dem Permanentmagneten (200) und dem Gestell-Träger (100), der ebenfalls aus einem ferromagnetischen Material besteht, wird durch die Kopplung eines Teils des Gestell-Trägers (100), wobei dieser Teil der aus ferromagnetischem Material besteht, des Gestell-Trägers (100) in Kontakt mit beiden polaren magnetischen Oberflächen (201 und 202) des Permanentmagneten (200) steht; und
c. Dieser aus ferromagnetischem Material bestehende Teil des Gestell-Trägers (100), der mit dem Permanentmagneten (200) gekoppelt ist, umfasst das Gelenk- und Verbindungselement (150) eines Brillenarmstücks (130) des Gestell-Trägers (100), und
d. Das abnehmbare Element (300) bildet an dem gegenüberliegenden Ende, an dem sich der Permanentmagnet (200) befindet, einen Haken (310), der zur Befestigung an einem Rand des Brillenglases (110) in der Nähe der Stelle geeignet ist, an der das Brillengestell, nachdem es getragen wurde, auf der Nase liegt.

2. Brillengestell mit mindestens einem abnehmbaren Element nach einem der vorhergehenden Ansprüche, wobei das abnehmbare Element aus einem starren Material besteht.

## Revendications

1. Monture de lunettes comprenant un support de monture (100), pourvu en outre d'un matériau ferromagnétique, et au moins un élément amovible (300); la monture de lunettes étant **caractérisée en ce que**:
a. au moins un élément amovible (300) comprend au moins un aimant permanent (200), dont la forme s'apparente à un anneau ouvert, dans lequel les deux surfaces magnétiques polaires (201 et 202) sont disposées aux deux extrémités dudit anneau ouvert et constituent également les deux surfaces de l'ouverture de l'anneau ouvert; et
b. le couplage entre l'aimant permanent (200) et le support de monture (100), également réalisé en un matériau ferromagnétique, est obtenu par couplage d'une partie dudit support de monture (100), donc cette partie, en matériau ferromagnétique, du support de monture (100) est en contact avec les deux surfaces magnétiques polaires (201 et 202) de l'aimant permanent (200); et
c. cette partie, en matériau ferromagnétique, du support de monture (100), couplée à l'aimant permanent (200), comprend l'élément d'articulation et de jonction (150) d'une pièce de bras de lunettes (130) du support de monture (100), et
d. l'élément amovible (300) forme, à l'extrémité opposée où se trouve l'aimant permanent (200), un crochet (310), apte à être fixé sur un bord de la lentille (110) à proximité de l'endroit où la monture de lunettes, une fois portée, repose sur le nez.

2. Monture de lunettes avec au moins un élément amovible selon l'une quelconque des revendications précédentes, dans laquelle l'élément amovible est réalisé dans un matériau rigide.
